(19) **Europäisches Patentamt / European Patent Office / Office européen des brevets**

(11) **EP 2 779 042 A1**

(12) **EUROPEAN PATENT APPLICATION**

(43) Date of publication:
17.09.2014 Bulletin 2014/38

(51) Int Cl.:
***G06Q 10/04*** (2012.01)

(21) Application number: 14160380.3

(22) Date of filing: 17.03.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 15.03.2013 US 201313843811

(71) Applicant: **United States Green Building Council (USGBC)**
**Washington, DC 20037 (US)**

(72) Inventors:
• **Horst, Scot**
**Kutztown, PA 19530 (US)**
• **Ramanujam, Mahesh**
**Durham, NC 27713 (US)**
• **Gami, Dhruv**
**Pittsburgh, PA 15206 (US)**
• **Fedrizzi, S. Richard**
**Syracuse, NY 13219 (US)**

(74) Representative: **Lecomte & Partners**
**P.O. Box 1623**
**1016 Luxembourg (LU)**

(54) **Systems, devices, components and methods for monitoring, certifying and/or recertifying the performance of a building or structure**

(57) **Field of the Invention**

Various embodiments of the inventions disclosed and described herein relate to systems, devices, components and methods for monitoring, certifying, and/or recertifying the performance of a building or structure.

**Background**

The Leadership in Energy and Environmental Design (LEED®) program is a building certification process developed by the U.S. Green Building Council (USGBC®). USGBC is a nonprofit organization that promotes sustainable building practices through LEED. LEED® has become the most widely used and recognized program of its kind in the world, providing building owners and operators a framework to identify, implement and measure green building design and operations. With fifty thousand projects in one hundred thirty five countries, LEED certifies 1.7 million square feet of green building space every day.

LEED evaluates a building across a range of criteria including Sites, Energy, Water, Materials, Resources and Indoor environmental quality. There are several LEED systems to address many different issues. In LEED for new construction, certification of a building may be performed following construction and before it is occupied. In LEED for Existing Buildings: Operations and Maintenance, certification is performed after one year of energy data along with other LEED credit information on how the building is being operated and managed. Following initial certification, existing buildings are recertified over a performance period that is to be no longer than five years. Currently, recertification occurs based on guidelines and LEED credits provided through USGBC. What is needed is a building and structure monitoring, certification and/or re-certification process that is more automated, more accurate, quicker, and that is capable of providing improved building or structure performance data on an on-going or regular basis.

FIG. 1

10

ACQUIRE BUILDING OR STRUCTURE PERFORMANCE DATA — 12

DISPLAY USING A BUILDING OR STRUCTURE DASHBOARD DEVICE THE BUILDING OR STRUCTURE PERFORMANCE DATA — 14

TRANSFER AT LEAST PORTIONS OF THE BUILDING OR STRUCTURE PERFORMANCE DATA TO A CENTRAL SERVER — 16

CERTIFY OR NOT CERTIFY THE BUILDING OR STRUCTURE AS MEETING PREDETERMINED BUILDING OR STRUCTURE PERFORMANCE CERTIFICATION STANDARDS — 18

**Description**

**Field of the Invention**

Various embodiments of the inventions disclosed and described herein relate to systems, devices, components and methods for monitoring, certifying, and/or recertifying the performance of a building or structure.

**Background**

The Leadership in Energy and Environmental Design (LEED®) program is a building certification process developed by the U.S. Green Building Council (USGBC®). USGBC is a nonprofit organization that promotes sustainable building practices through LEED. LEED® has become the most widely used and recognized program of its kind in the world, providing building owners and operators a framework to identify, implement and measure green building design and operations. With fifty thousand projects in one hundred thirty five countries, LEED certifies 1.7 million square feet of green building space every day.

LEED evaluates a building across a range of criteria including Sites, Energy, Water, Materials, Resources and Indoor environmental quality. There are several LEED systems to address many different issues. In LEED for new construction, certification of a building may be performed following construction and before it is occupied. In LEED for Existing Buildings: Operations and Maintenance, certification is performed after one year of energy data along with other LEED credit information on how the building is being operated and managed. Following initial certification, existing buildings are recertified over a performance period that is to be no longer than five years.

Currently, recertification occurs based on guidelines and LEED credits provided through USGBC. What is needed is a building and structure monitoring, certification and/or re-certification process that is more automated, more accurate, quicker, and that is capable of providing improved building or structure performance data on an on-going or regular basis.

**Summary**

In one embodiment, there is provided a method for monitoring, certifying, and subsequently recertifying performance of a building or structure disclosed, comprising acquiring building or structure performance data corresponding to the building or structure, the performance data comprising at least three of water data, energy data, human experience data, transportation data, and waste data, displaying, using at least one building or structure dashboard device, the performance data to at least one of a building or structure user and a building or structure dashboard manager, transferring at least portions of the performance data to a server, and on the basis of the transferred data, certifying or not certifying the building or structure as meeting predetermined building or structure performance certification standards.

In another embodiment, there is provided a system for monitoring, certifying, and subsequently recertifying performance of a building or structure disclosed, comprising at least one building or structure data acquisition device configured to receive input signals from a plurality of sensors located in or around the building or structure, the input signals representing building or structure performance data corresponding to the building or structure, the performance data comprising at least three of water data, energy data, human experience data, transportation data, and waste data, at least one dashboard device operably connected to the data acquisition device, the dashboard device being configured to display the performance data to at least one of a building or structure user and a building or structure dashboard manager, the dashboard device further being configured to receive building or structure performance input data from at least one of the user and the manager, computer and internet means for transferring at least portions of the building or structure performance data to a server, the server being configured and programmed to at least one of store the transferred data for subsequent analysis and to certify or not certify the building or structure as meeting the performance certification standards.

Further embodiments are disclosed herein or will become apparent to those skilled in the art after having read and understood the specification and drawings hereof.

Further, the present invention may be directed to the subject-matter according to one or more of the following sections:

1. A method for monitoring, certifying or recertifying performance of a building or structure, preferably with a system described herein, the method comprising one or more of the following steps:

acquiring building or structure performance data corresponding to the building or structure, the performance data comprising at least three of water data, energy data, human experience data, transportation data, and waste data;

displaying, using at least one building or structure dashboard device, the performance data to at least one of a building or structure user and a building or structure dashboard manager;
transferring at least portions of the performance data to a server, and
on the basis of the transferred data, certifying or not certifying the building or structure as meeting predetermined building or structure performance certification standards.

2. The method of section 1, further comprising acquiring the building or structure performance data using at least one building or structure data acquisition device and corresponding sensors and data inputs located in the building or structure, the data acquisition device being operably connected to the dashboard device.

3. The method of section 2, wherein the data acquisition device comprises a variable air volume control device or system.

4. The method of section 2 or 3, further comprising the user or dashboard manager inputting building or structure performance data into the dashboard device.

5. The method according to one of sections 2 to 4, further comprising the user or dashboard manager inputting building or structure performance data into the data acquisition device.

6. The method according to one of the preceding sections, further comprising associating a unique IP address with the building or structure.

7. The method according to one of the preceding sections, further comprising using at least one of a mobile phone, a desktop computer, a laptop computer, a tablet computer, a personal data assistant (PDA) and a touchscreen device as the dashboard device.

8. The method according to one of the preceding sections, further comprising providing the water data with at least one water meter or monitor located in the building or structure and operably connected to at least one of the data acquisition device and the dashboard device.

9. The method according to one of the preceding sections, further comprising providing the energy data with at least one energy meter or monitor located in the building or structure and operably connected to at least one of the data acquisition device and the dashboard device.

10. The method according to one of the preceding sections, further comprising providing the waste data with at least one of: (a) a waste meter or monitor located in the building or structure and operably connected to at least one of the data acquisition device and the dashboard device, and (b) waste data inputs entered by the user or dashboard manager into the building data acquisition device or the dashboard device.

11. The method according to one of the preceding sections, further comprising providing human experience data with at least one of: (a) a human experience meter or monitor located in the building or structure and operably connected to at least one of the data acquisition device and the dashboard device, and (b) human experience data inputs entered by at least one of the user, the dashboard manager and an occupant of the building or structure into the building data acquisition device or the dashboard device.

12. The method according to one of the preceding sections, further comprising providing transportation data with at least one of: (a) a transportation meter or monitor located in the building or structure and operably connected to at least one of the data acquisition device and the dashboard device, and (b) transportation data inputs entered by at least one of the user, the dashboard manager and an occupant of the building or structure into the building data acquisition device or the dashboard device.

13. The method according to one of the preceding sections further comprising transferring the performance data to the server via the internet.

14. The method according to section 13, further comprising transferring the performance data to the server from the data acquisition device.

15. The method according to section 13, further comprising transferring the performance data to the server from the dashboard device.

16. The method according to one of the preceding sections, wherein at least portions of the performance data are provided to the building or structure data acquisition device wirelessly.

17. The method according to one of the preceding sections, further comprising wirelessly providing the performance data to at least one of the data acquisition device and the dashboard device.

18. The method according to one of the preceding sections, further comprising generating a score for the performance data received from the building or structure.

19. The method according to section 18, further comprising including at least one of indoor air quality, carbon dioxide levels, occupancy rates, occupant satisfaction, and absentee rates in the human experience data when determining the score.

20. The method according to section 18, further comprising including at least one of commuting methods, commuting distances, and carbon dioxide equivalents associated with the commuting methods, and carbon dioxide equivalents associated with the commuting distances in the transportation data when determining the score.

21. The method according to section 18, further comprising including at least one of water use in the building or structure space, water use for equipment located in the building or structure, water use in cooling towers associated with the building or structure, and irrigation associated with the building or structure in the water data when determining the score.

22. The method according to section 18, further comprising including at least one of energy use in the building or structure, a type of the building or structure, a construction method or design associated the building or structure, an occupancy rate of the building or structure, and weather data associated with the building or structure in the energy data when determining the score.

23. The method according to section 18, further comprising including at least one of an amount of waste generated in the building or structure, an amount of waste diverted to compost from the building or structure, and an amount of waste recycled from the building or structure in the waste data when determining the score.

24. The method according to section 18, further comprising employing the score to determine whether the building or structure meets the predetermined performance certification standards.

25. The method according to section 24, further comprising certifying or not certifying the building or structure as meeting the predetermined performance certification standards on the basis of the score.

26. The method according to section 25, further comprising subsequently recertifying or not re-certifying the building or structure as meeting the predetermined performance certification standards on the basis of an updated score.

27. A system for monitoring, certifying or recertifying performance of a building or structure, preferably for carrying out the method according to one of the preceding sections, the system comprising one or more of:

at least one building or structure data acquisition device configured to receive input signals from a plurality of sensors located in or around the building or structure, the input signals representing building or structure performance data corresponding to the building or structure, the performance data comprising at least three of water data, energy data, human experience data, transportation data, and waste data;
at least one dashboard device operably connected to the data acquisition device, the dashboard device being configured to display the performance data to at least one of a building or structure user and a building or structure dashboard manager, the dashboard device further being configured to receive building or structure performance input data from at least one of the user and the manager;
computer and internet means for transferring at least portions of the building or structure performance data to a server, the server being configured and programmed to at least one of store the transferred data for analysis and to certify or not certify the building or structure as meeting the performance certification standards.

28. The system of section 27, wherein the data acquisition device is further configured to receive building or structure performance input data from the user or dashboard manager.

29. The system of section 27 or 28, wherein the building data acquisition device comprises a variable air volume control device or system.

30. The system according to one of sections 27 to 29, wherein the building or structure has a unique IP address associated therewith.

31. The system according to one of sections 27 to 30, wherein the dashboard device is at least one of a mobile phone, a desktop computer, a laptop computer, a tablet computer, a personal data assistant (PDA) and a touchscreen device as the dashboard device.

32. The system according to one of sections 27 to 31, further comprising at least one water meter or monitor located in the building or structure and operably connected to at least one of the data acquisition device and the dashboard device, the water meter or monitor being configured to provide at least portions of the water data.

33. The system according to one of sections 27 to 32, further comprising at least one energy meter or monitor located in the building or structure and operably connected to at least one of the data acquisition device and the dashboard device, the energy meter or monitor being configured to provide at least portions of the energy data.

34. The system according to one of sections 27 to 33, further comprising at least one waste meter or monitor located in the building or structure and operably connected to at least one of the data acquisition device and the dashboard device, the waste meter or monitor being configured to provide at least portions of the energy data.

35. The system according to one of sections 27 to 34, further comprising at least one human experience meter or monitor located in the building or structure and operably connected to at least one of the data acquisition device and the dashboard device, the human experience meter or monitor being configured to provide at least portions of the human experience data.

36. The system according to one of sections 27 to 35, further comprising at least one transportation meter or monitor located in the building or structure and operably connected to at least one of the data acquisition device and the dashboard device, the transportation meter or monitor being configured to provide at least portions of the transportation data.

37. The system according to one of sections 27 to 36, further comprising an internet connection between the server and at least one of the data acquisition device and the dashboard device.

38. The system according to one of sections 27 to 37, wherein at least some of the plurality of sensors are configured to wirelessly transfer the input data signals to the building or structure data acquisition device.

39. The system according to one of sections 27 to 38, further comprising wireless means configured to provide the performance data to at least one of the data acquisition device and the dashboard device.

The features of the above described sections may be combined with further features of the following description.

**Brief Description of the Drawings**

Different aspects of the various embodiments will become apparent from the following specification, drawings and claims in which:

Fig. 1 shows a method 10 of monitoring, certifying, and/or recertifying the performance of a building or structure;
Fig. 2 shows one embodiment of a monitoring, certifying, and/or recertifying system 20;
Fig. 3 shows another embodiment of a monitoring, certifying, and/or recertifying system 20;
Fig. 4 shows one embodiment of a method 70 according to which data acquisition device 22 may be operated;
Fig. 5 shows one embodiment of a data acquisition device 22;
Fig. 6 shows one embodiment of a dashboard device 26 that is a "LEED Dynamic Plaque;"
Figs. 7 through 10 illustrate several different embodiments of dashboard devices 24, and
Figs. 11 through 20 show several different embodiments of visual displays and information that may be provided by system 20 to one or more of the general public, users, occupants, and building managers.

The drawings are not necessarily to scale. Like numbers refer to like parts or steps throughout the drawings, unless otherwise noted.

**Detailed Descriptions of Some Embodiments**

Described herein are various embodiments of systems, devices, components and methods relating to systems, devices, components and methods for monitoring, certifying, and/or recertifying the performance of a building or structure.

Buildings are not static, and represent a combination of events that are constantly changing. These events may include new construction, renovation, a new tenant moving into a new floor or out of another. New maintenance contracts come in to being, or are changed from daytime to nighttime. Weather changes, people act differently in different buildings, and so on. Certification of the greenness of a building needs to better reflect the living nature of a building. This reflection can better guide behavior than a static certification. A static certification can have many benefits when design and construction are certified. But these benefits are limited when it comes to the question of how a building is actually being used. The situation is similar to that of automobiles. In the United States, new automobiles are certified to be capable of attaining a certain mileage. This certification of potential miles per gallon varies greatly once the automobile is in real use. In the same way that an automobile dashboard can guide the behavior of a driver, performance based LEED recertification program may be employed to reflect the actual conditions and behaviors of building occupant in a building or structure, and used to improve performance data associated with the building or structure.

As explained above, LEED certification for existing buildings reflects the life of a building through a recertification program. This program currently applies only to buildings that have entered the LEED system through the LEED for Existing Buildings: Operation and Maintenance program. The present specification and drawings describe and disclose various embodiments of a performance based LEED or other building or structure certification and recertification program and how it may be applied to existing LEED-certified buildings. According to one such embodiment, all buildings or structures, once they have been constructed, become existing buildings and therefore need to recertify on a regular basis. In a recertification program, buildings can be recertified based on performance categories rather than LEED credits. A score is created based on one or more algorithms that reflect an actual LEED or other score as closely as possible. According to one embodiment, such a score may be created to reflect five basic performance categories:

1. Human Experience: Including indoor air quality, carbon dioxide measurements in the air, occupancy rates, occupant satisfaction, absentee rates, etc.
2. Transportation: Including commuting methods and distances to equate to vehicle miles traveled or a carbon dioxide equivalent
3. Water: The use of water in the space, in equipment for processes in the building such as sinks for feeding, cleaning or water cooled cooling towers and on the site including irrigation.
4. Energy: The use of energy in and related to the building. The energy score will be based on building type, building occupancy rate and weather data. This will allow the score to be normalized across a wide variety of locations and situations.
5. Waste: The amount of waste generated and diverted to compost and recycling or other uses.

Healthy buildings and structures have healthy input and feedback mechanisms. In a typical building, input and feedback tends to function based on a "complaint-o-meter". People may say "I'm too hot" or "I'm too cold," or the response is non-existent or untimely. The methods and systems described herein create an ecosystem of input and feedback tools, and engage several basic types of stakeholders: the general public, owners, managers, users and building occupants.

With any type of building or structure certification or recertification program, it is difficult to know if the outcome will continue into the future. A performance based LEED or other recertification program for existing buildings can be focused on the outcomes of the actions taken to create a green space. These outcomes require ongoing and continuing work to be meaningful. Designing a building or structure for low energy use may make no or little difference if the occupants of the building do not use the space the way in the intended manner. An energy saver function in a lighting system is worthless if it is overridden. Performance based recertification of a building or structure can provide validation of whether designed systems and human behavior are working, and continuing to work, to reduce a building's impact in the main ways outlined above.

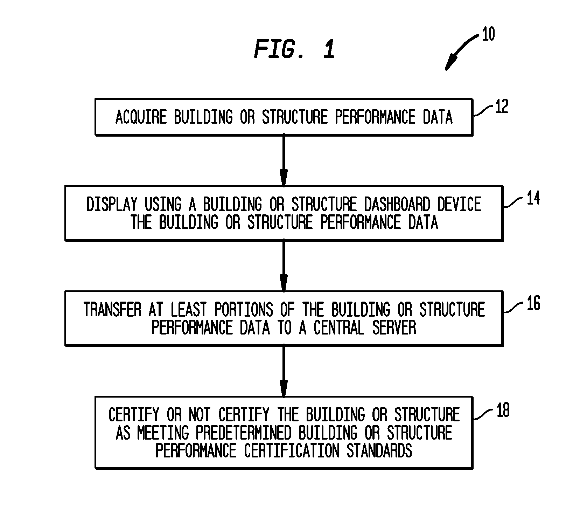

In one embodiment, a LEED or other ecosystem is a system and method that combines interrelating ideas, mechanisms and tools, more about which is now said. Referring now to Fig. 1, there is shown one embodiment of a method 10 of monitoring, certifying, and/or recertifying the performance of a building or structure comprising the following steps. At step 12, building or structure performance data corresponding to the building or structure are acquired, where the performance data comprise at least three of water data, energy data, human experience data, transportation data, and waste data. At step 14, at least one building or structure dashboard device is employed to display the performance data to at least one of a building or structure user and a building or structure dashboard manager. At step 16, at least portions of the performance data are transferred to a server or a central server. On the basis of the transferred data, at step 18 the building or structure is certified or not certified as meeting predetermined building or structure performance certification standards.

The method shown in Fig. 1 has many possible variants and embodiments. For example, method 10 may further comprise acquiring the building or structure performance data using at least one building or structure data acquisition device and corresponding sensors and data inputs located in the building or structure, where the data acquisition device is operably connected to the dashboard device. The building data acquisition device may comprise a variable air volume control device or system, and the user or dashboard manager may input building or structure performance data into the dashboard device. The user or dashboard manager may also input building or structure performance data into the data acquisition device. A unique IP address is preferably associated with the building or structure so that its location and other data associated therewith may be satisfactorily identified by the system. At least one of a mobile phone, a desktop computer, a laptop computer, a tablet computer, a personal data assistant (PDA) and a touchscreen device may be employed as the dashboard device.

Water data may be provided to the system with at least one water meter or monitor located in the building or structure that is operably connected to at least one of the data acquisition device and the dashboard device. Energy data may be provided to the system with at least one energy meter or monitor located in the building or structure that is operably connected to at least one of the data acquisition device and the dashboard device. Waste data may be provided to the system with at least one of: (a) a waste meter or monitor located in the building or structure and operably connected to at least one of the data acquisition device and the dashboard device, and (b) waste data inputs entered by the user or dashboard manager into the building data acquisition device or the dashboard device. Human experience data may be provided to the system with at least one of: (a) a human experience meter or monitor located in the building or structure and operably connected to at least one of the data acquisition device and the dashboard device, and (b) human experience data inputs entered by at least one of the user, the dashboard manager and an occupant of the building or structure into the building data acquisition device or the dashboard device. Transportation data may be provided to the system by at least one of: (a) a transportation meter or monitor located in the building or structure and operably connected to at least one of the data acquisition device and the dashboard device, and (b) transportation data inputs entered by at least one of the user, the dashboard manager and an occupant of the building or structure into the building data acquisition device or the dashboard device.

According to one embodiment, performance data are transferred to the server or central server via the internet from, for example, the data acquisition device and/or the dashboard device. At least portions of the performance data may be provided to the building or structure data acquisition device or to the dashboard device wirelessly.

A score for performance data received from the building or structure may be generated by the system. By way of example, at least one of indoor air quality, carbon dioxide levels, occupancy rates, occupant satisfaction, and absentee rates may be included in the human experience data when determining the score. At least one of commuting methods, commuting distances, and carbon dioxide equivalents associated with the commuting methods, and carbon dioxide equivalents associated with the commuting distances may be included in the transportation data when determining the score. At least one of water use in the building or structure space, water use for equipment located in the building or structure, water use in cooling towers associated with the building or structure, and irrigation associated with the building or structure may be included in the water data when determining the score. At least one of energy use in the building or structure, a type of the building or structure, a construction method or design associated the building or structure, an occupancy rate of the building or structure, and weather data associated with the building or structure may be included in the energy data when determining the score. At least one of an amount of waste generated in the building or structure, an amount of waste diverted to compost from the building or structure, and an amount of waste recycled from the building or structure may be included in the waste data when determining the score. The score may be employed to determine whether the building or structure meets the predetermined performance certification standards, to certify or not certify the building or structure as meeting the predetermined performance certification standards, and/or to subsequently recertify or not re-certify the building or structure as meeting the predetermined performance certification standards.

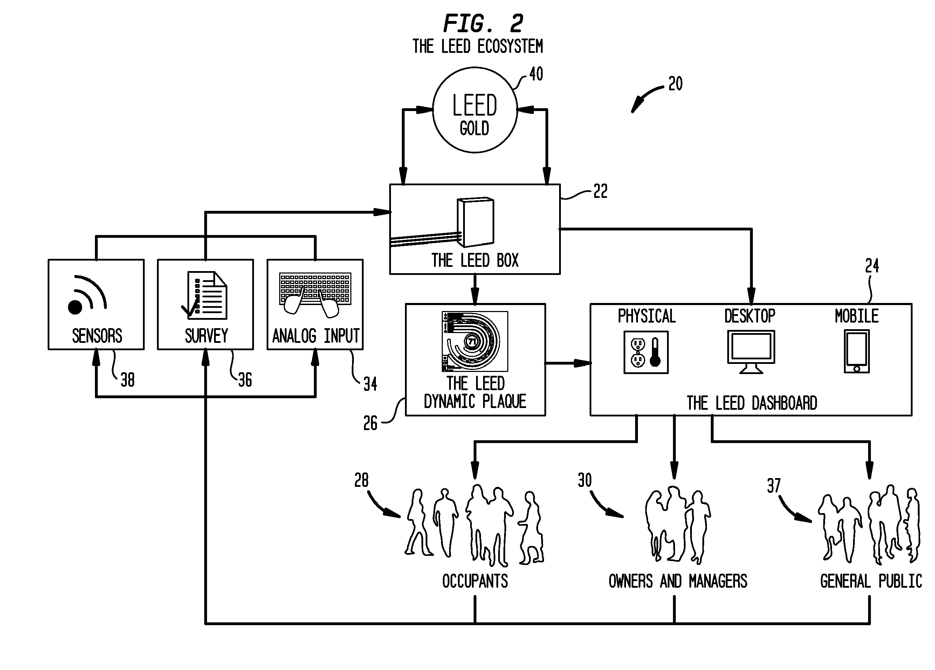

Fig. 2 shows one embodiment of a system 20 for monitoring, certifying, and subsequently recertifying performance of a building or structure. As shown in Fig. 2, at least one building or structure data acquisition device 22 is configured to receive input signals from a plurality of sensors 38 located in or around the building or structure. The input signals represent building or structure performance data corresponding to the building or structure. According to one embodiment, the performance data may comprise at least three of water data, energy data, human experience data, transportation data, and waste data. At least one dashboard device 24 and/or 26 is operably connected to data acquisition device 22, and dashboard device 24 and/or 26 is configured to display the performance data to at least one of a building or structure user 28 and/or 37 or to a building or structure dashboard manager 30.

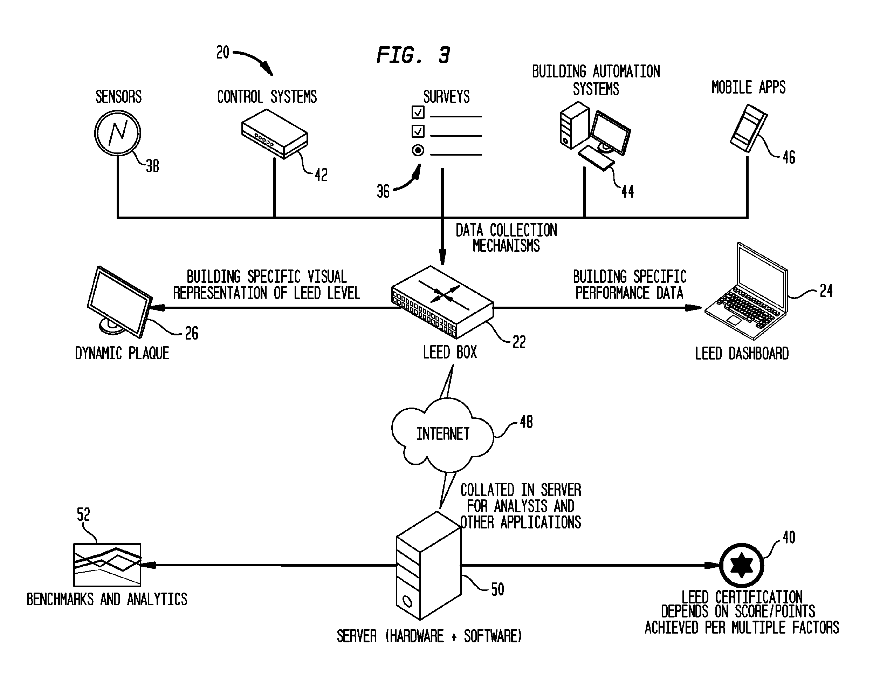

As further shown in Figs. 2 and 3, data acquisition device 22 and/or dashboard device 24 and/or 26 is further configured to receive building or structure performance input data from at least one of the user and the manager 30. As shown in Fig. 3, computer and internet means 24, 22 and 48 may be employed to transfer at least portions of the building or structure performance data to server 50, which is configured and programmed to at least one of store the transferred data for subsequent analysis and to certify or not certify the building or structure as meeting the performance certification standards. Processing and analysis of the performance data need not be carried out by server 50, and may instead be performed by a different computer.

In one embodiment, server 50 is a cloud-hosted central server that collects data from devices 22, 24 and/or 26, and performs analysis on the data received therefrom. Such analyses include benchmark analysis using anonymous data from various devices 22, 24 and/or 26 in different builds or structures, which information can then be provided back to specific buildings about their performance relative to other buildings. Server 50 may also be configured to calculate a score for LEED Certification based on multiple factors, and to make such information available via various mechanisms, including a web application, mobile apps and web services. Such information may also be sent back to the LEED box for display as plaque 26 or any other dashboard device 24.

Continuing to refer to Figs. 2 and 3, data acquisition device 22 may be configured to receive building or structure performance input data from the user or dashboard manager. In one embodiment, data acquisition device 22 comprises a variable air volume control device or system. As described above, dashboard device 24 and/or 26 may comprise one or more of a mobile phone, a desktop computer, a laptop computer, a tablet computer, a personal data assistant (PDA) and a touchscreen device as the dashboard device.

Still referring to Figs. 2 and 3, and in one embodiment, data acquisition device 22 is a "LEED box™" that is placed in the building or structure. Data acquisition device box 22 may be configured to provide an IP address for the building, and to collect information from building management systems as well as analog inputs, and send such information to a server.

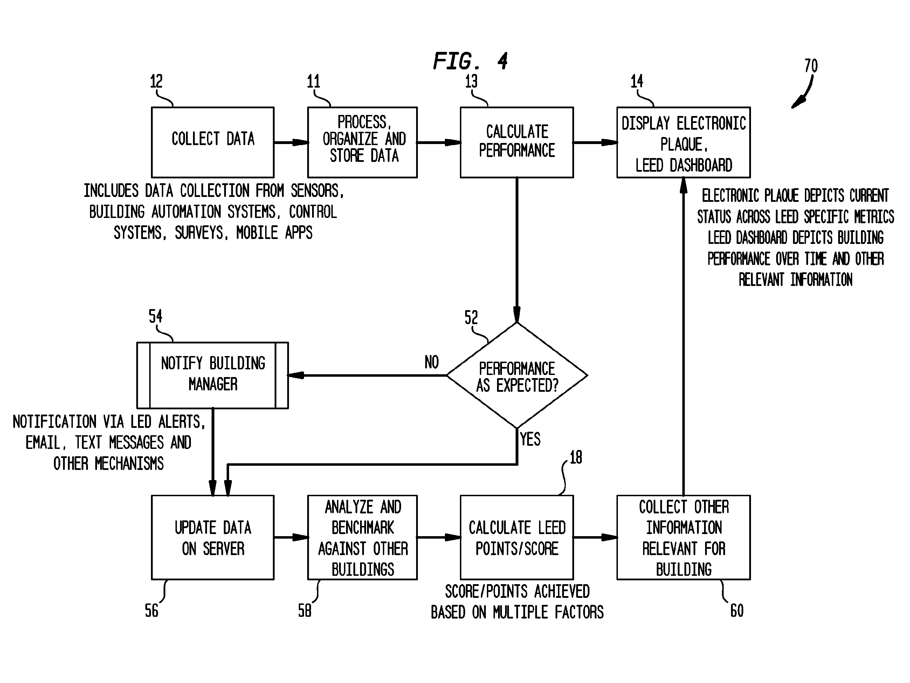

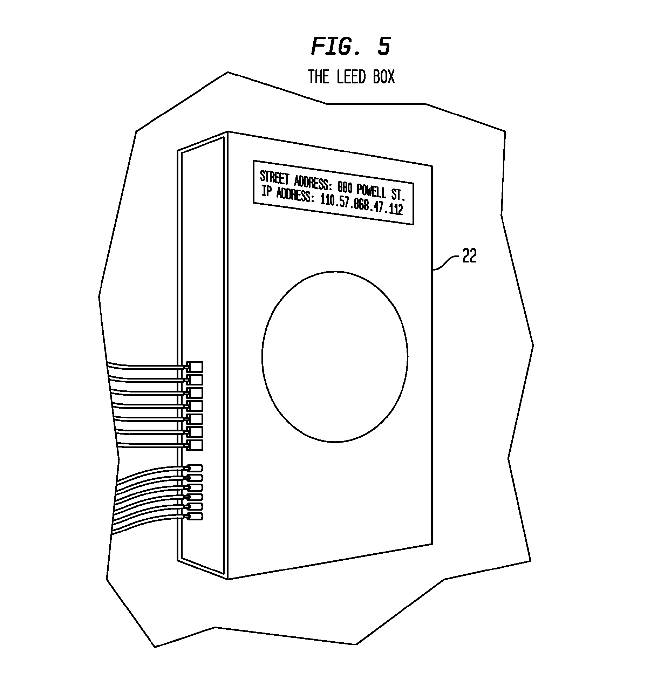

Fig. 4 shows one embodiment of a method 70 according to which data acquisition device 22 (e.g., a LEED box) may be operated. (In other embodiments, dashboard devices 24 or 26 may be similarly configured and operated as shown in Fig. 4.) Fig. 5 shows one embodiment of a data acquisition device 22, which in some embodiments is a LEED box. Data acquisition device 22 is a physical device placed on-site in, around or near the building that is to be monitored and/or certified. Device 22 may be configured to provide a visual display corresponding to a LEED or other certification level, and may also include functionality and displays similar to, or the same as, dashboard device 24. Both such visual displays may be combined into the same display, or can be configured as multiple displays. Device 22 is also connected to server 50 over a stable internet connection. In one embodiment, device 22 uploads building specific data to server 50 and receives updates and relevant information for display on the building's one or more device dashboards 24. Device 22 is a hardware solution that can be configured to serve as a central point for data capture, analysis and information dissemination regarding the specific building or structure with which it is associated. Device 22 may comprise one or more of data input and output components, a geographic location component, a communication component, and so on.

Through integration with existing building automation systems, control systems and sensors installed in the building or structure, device 22 can capture incoming data about the ongoing performance of the building as they relate to LEED or other certification programs. Device 22 can also be configured to accept input data through custom survey or manual data entry tools, and/or mobile and web applications in use by building occupants, users and/or managers. By way of example, such tools can be employed to capture data the automation of which is difficult, such as emotional responses, daily occupant activity, and the like.

In one embodiment, device 22 and/or dashboard 24 performs basic analyses of captured data and information based on pre-defined algorithms, and then displays on plaque 26 the analyzed information, historical trends, alerts, or other information provided by server 50. If device 22 and/or dashboard device 24 determines that building performance has fallen below expected levels, or if anomalies are discovered in the data, device 22 and/or dashboard device 24 can be configured to send notifications to the building manager to take action. Device 22 and/or dashboard device 24 can also be configured to periodically upload acquired or collected data to server 50 for further analysis, comparison, benchmarking and determination of LEED or other scores or certification levels.

Device 22 can be configured to provide several main functions, including providing a unique IP address for a project, the building, or both, thereby permitting projects and buildings to be tracked in similar fashion around the world. Device 22 can also serve as a main data collection point, and to contain software configured to provide performance and other data back to server 50 for review. Device 22 may also be connected to a building management software system, if it exists, which then provides at least some of the data inputs thereto. If a building management software system does not exist, device 22 can function as a collection point for digital and analog inputs from the building manager and occupants, and from the plurality of building sensors described above.

In one embodiment, server 50 is configured to perform advanced analytics, and executes an algorithm that determines LEED or other scores or certification levels. Information on server 50 may be accessed via a web interface, mobile apps or web services. Sufficient security and access controls are built into system 20 to keep each building's data private and accessible only to authorized users.

Referring now to Figs. 2, 3, 4 and 5, and according to one embodiment, input to system 20 may come from any of a variety of directions. Complex and large structures with building management systems can be configured to connect to, and operate in conjunction with, device 22, 24 or 26. One concept associated with device 22 is rooted in the idea that buildings are alive, and like other living entities, they change over time. To truly measure and gauge how "green" a building might be, ongoing or regular measurements of its performance are required.

According to one embodiment, device 22, 24 or 26 comprises four core components - on-site hardware, server hardware, server software, and applications.

On-Site Hardware Examples

- An integrated device 22, 24 or 26 that is physically placed inside a building and connected to data sources such as building management systems, system controls, and the like.
- Any of devices 22, 24 and 26 may comprise one or more of:

   ◦ Data Input component: connectivity to building systems and communication channels. Integration with other systems on-site.
   ◦ Data output component: connectivity to screens/monitors to view device output
   ◦ Data storage component: Local hard disk to persist collected data
   ◦ Communications component: connectivity to a remote server over any viable communication channel like Wireless, Ethernet, Bluetooth, Cellular etc.
   ◦ Location component: A GPS based location identification component
   ◦ Notification component: An alert mechanism built using LED lights, sound alerts, electronic communication alerts or a combination of all
   ◦ Analytical component: In-built analytical capabilities to perform local analysis of data being collected, perform diagnostics and predictive analysis for potential issues
   ◦ Remote access component: Software and hardware capability to access the device from a remote location to perform maintenance, service or data interchange
   ◦ Security component: Controls built to lock down device and prevent unauthorized access

**Server Hardware Examples**

- Hardware associated with server 50 may comprise:

   ◦ Cloud hosted and data-center hosted servers in a public-private hybrid configuration
   ◦ Load balanced, secure access point into the pool of servers with a firewall to put servers in a DMZ (Demilitarized Zone)
   ◦ Scalable hardware with hot-swappable RAM and Hard Disks
   ◦ Replicated across various global locations using CDN (Content Distribution Networks)

**Server Software Examples**

- A server based software system capable of collecting data from various channels, including but not limited to device 22, dashboard 24, plaque 26, or other hardware components, or via data uploads, manual data entry, integration with other software, mobile data entry, and so on.
- Software for server 50 may comprise:

   ◦ Distributed operating system - A cloud-enabled operating system layer to enable real-time scaling of capacity by adding additional resources to the server(s).
   ◦ Persistence component - A Big Data enabled database with the ability to store data for relational, columnar, real-time, time-series and distributed access.
   ◦ N-tier architecture built using a multi-tenant framework - Software-as-a-Service oriented user access, developed to use a common backend for multiple clients. Ability to separate data storage by client.
   ◦ Responsive UI - A user Interface developed using front-end technologies like HTML5, CSS3, Javascript, Jquery, Responsive toolkits, Twitter Bootstrap etc. for universal access to the data across all devices, platforms and operating systems.

◦ Business Logic component - A data processing module including various algorithms for analyzing building data, trends, statistical analysis, heuristics, semantics, search models, taxonomies, etc.

◦ Security component - An in-built security model for privacy, data access, enforcing access models using access control lists, role-based access control, two-factor authentication, encrypted data storage using 3DES/AES/Blowfish or better methods and keys larger than 2048 bytes.

◦ Communication component - Messaging, notification and alert mechanisms built into the tool to notify users of various system events, updates, and data input requirements.

**Examples of "Apps" or Applications**

- **LEED or Other Dashboard** 24 or 26 - An application designed to provide a visualized narrative of a building's performance at a given point in time, or over a period of time. The dashboard may be interactive and allow a user or manager to obtain further details about specific performance metrics. Dashboard 24 or 26 can be configured to consolidate all information gathered and analyzed by system 20 and present same in the context of the building's performance. Dashboard 24 or 26 may also be visible on a user portal, mobile app, or as a dedicated display in the building.
- **Data Collection** - System 20 can be configured to collect data from various sources, channels and mechanisms, such as building automation systems, control systems, web applications, social media, mobile applications, survey tools, third-party applications, and the like.
- **Information Channel** - System 20 can be configured to provide aggregated news, updates and other information relevant to building occupants. Such information may include co-branded messaging, advertisements and sponsored messages.
- **Education** - System 20 can be configured to provide educational insights to users or occupants based on the building's and/or their current performance, and suggest methods to improve building performance, reduce waste, and optimize efficiency.
- **Emergency Services** - System 20 can be configured to alert emergency services such as the police, local security, fire services and medical services when an emergency situation arises.
- **Security** - System 20 can be configured to collect data for use by local, state or federal agencies.

**Data Collection Mechanisms**

These can include automated and manual methods of data collection. Building Automation Systems, Control Systems and Sensors collect data over time and are integrated for data input into the LEED box. Manual data collection can be configured via Survey tools and Mobile apps.

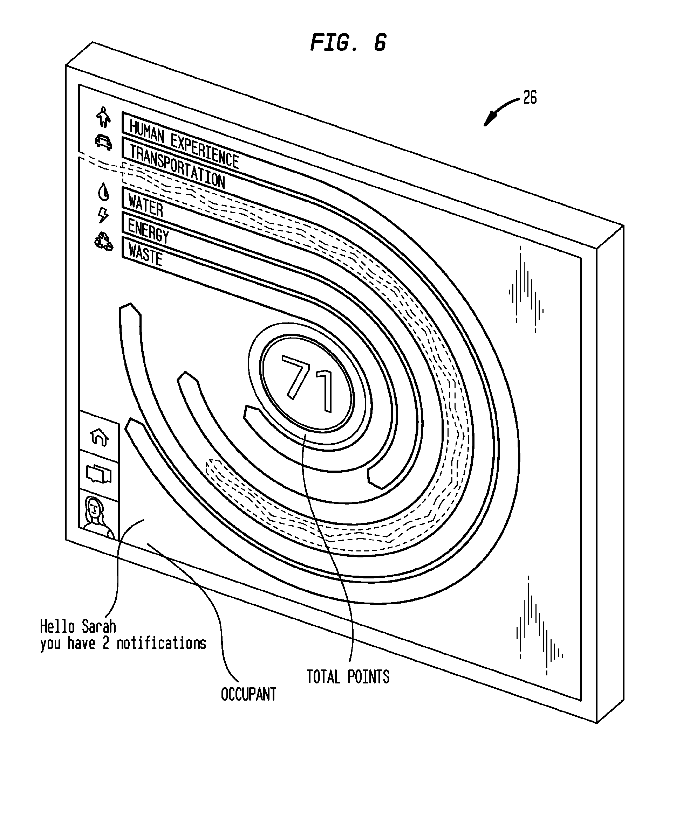

As shown in Fig. 6, in one embodiment, dashboard device 26 is a "LEED Dynamic Plaque™," which is configured to display information provided by data acquisition device 22 (e.g., a LEED box). Plaque 26 can be configured to display a LEED score and the latest level of certification corresponding to the building or structure. Plaque 26 can also be configured to display benchmark data regarding other buildings of a similar type, in a similar location, or in different (e.g., global) locations. According to one embodiment, the display of plaque 26 can be configured to activate or illuminate when people walk thereby or come into proximity thereto. Plaque 26 can also be configured to change its display dynamically as a function of time. The display of plaque 26 may also be reviewed and updated via the internet or web via server 50.

According to one embodiment, dashboard device 24 is a LEED Dashboard™ configured to provide a landing place for users and/or managers to provide input data to the system, to receive visual or other feedback therefrom. As described above, dashboard devices 24 and 26 may be any one or more of a variety of devices, such as a computer and associated computer display, a desktop computer and an associated display, a mobile phone, a touchpad, or any other such suitable device. In one embodiment, a dashboard device 24 is a place where interaction with plaque 26 and/or data acquisition device 22 can occur, and has three main landing screens depending on the user (e.g., general public 37, owners and managers 30, and occupants 28).

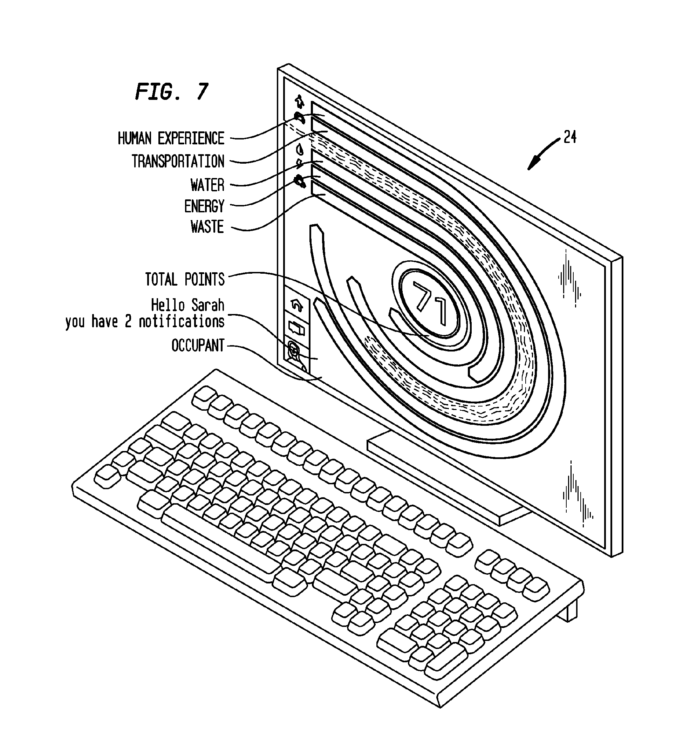

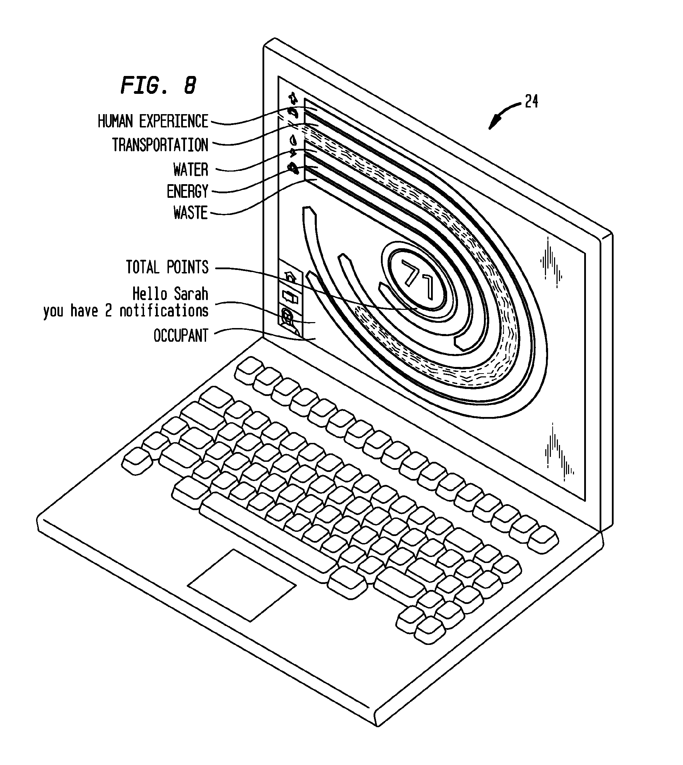

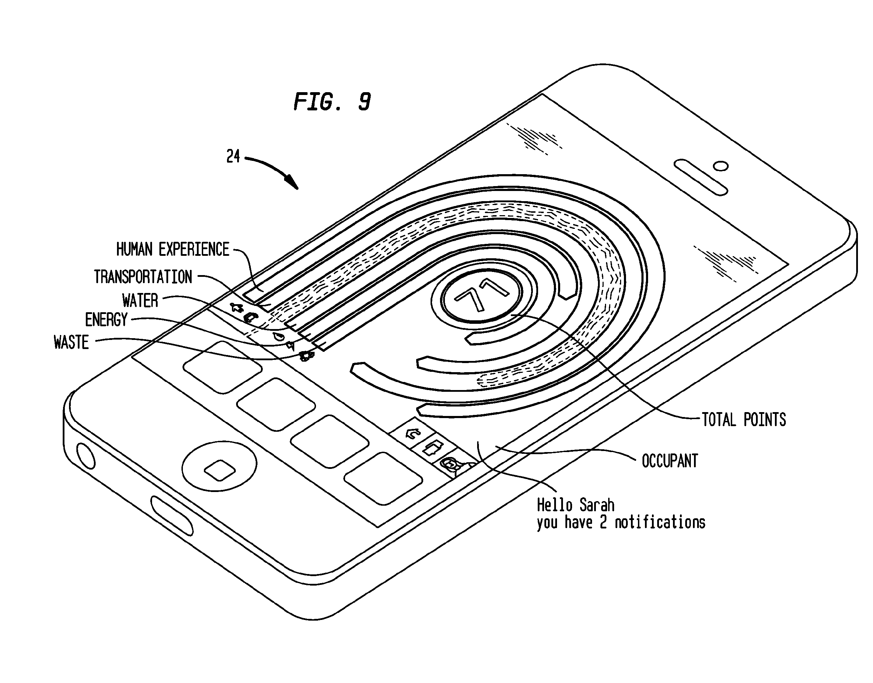

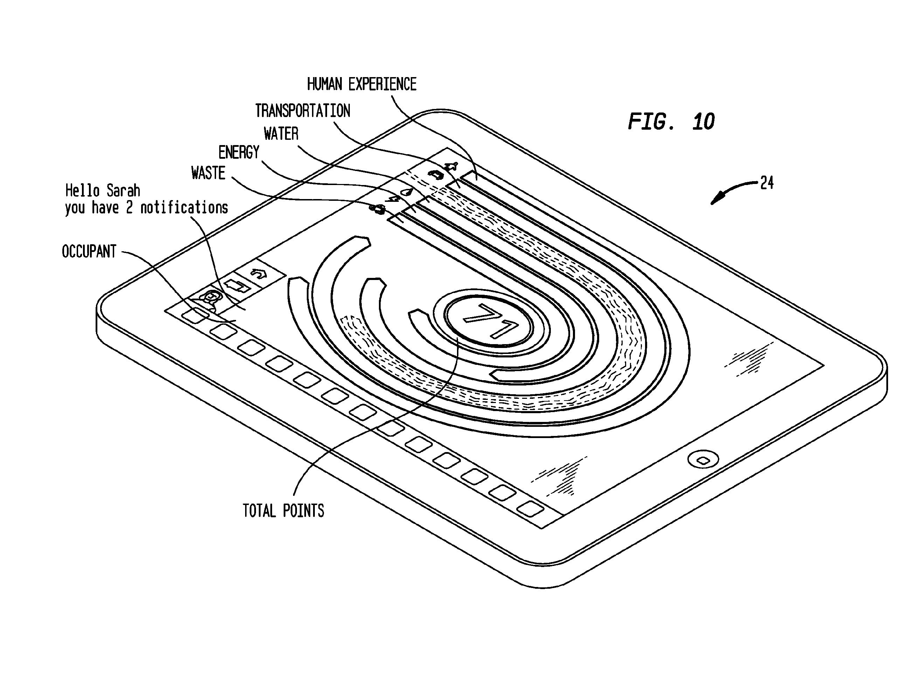

Referring now to Figs. 6 through 10, there are shown various embodiments of a LEED dynamic plaque 26 (Fig. 6), and dashboard devices 24, such as a desktop computer 24 (Fig. 7), a laptop computer 24 (Fig. 8), a mobile phone 24 (Fig. 9), and a touchscreen or tablet 24 (Fig. 10). Other embodiments of dashboard devices 24 are contemplated, such as PDAs. Dashboard devices can be configured to execute applications and programs that provide information to server 50, and back to the user through data acquisition device 22 and/or plaque 26 or dashboard device 22.

Referring now specifically to Fig. 9, there is shown one embodiment of a LEED Dynamic Plaque located in a building lobby or the entry to a project, which is configured to provide a visual representation of the LEED or other score, and the at least types of performance data associated with the building or structure.

A LEED or other device dashboard 24 or 26 can also be configured to permit users, occupants or managers to dig deeper into the performance data. Such dashboard devices can be configured with applications that permit users to input analog data required for recertification. If a building management system exists and as circumstances in the building or structure change, dashboard device 24 or 26 can be a location where information flows between system 20 and its occupants or users regarding building and occupant or user performance.

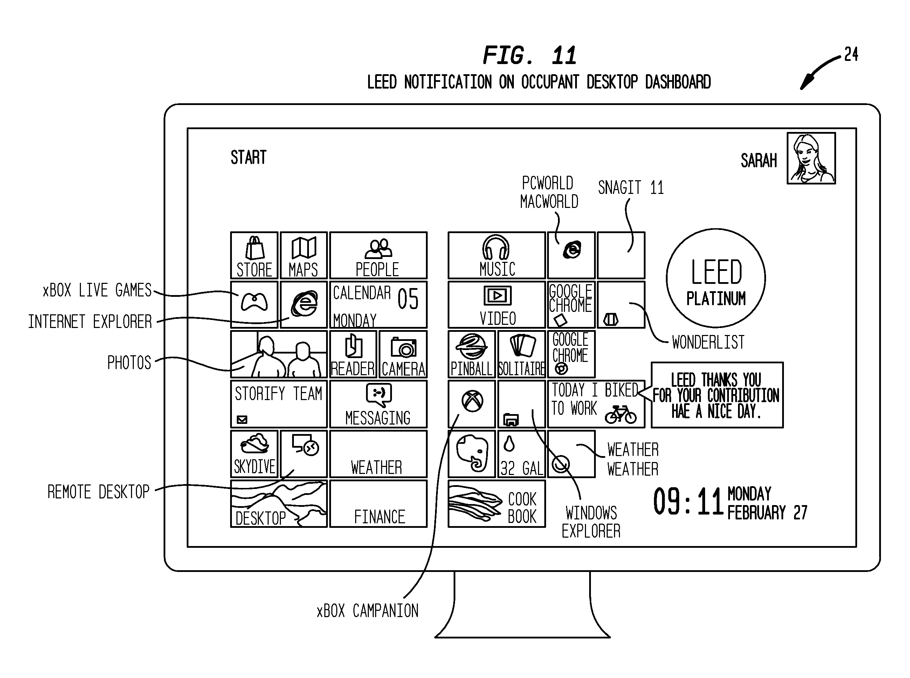

Fig. 11 shows one embodiment of a dashboard device display, which permits a user, occupant or manager to manage applications, respond to inquiries, or receive notifications. Such a dashboard landing page can be integrated in system 20 so everyone or selected persons in the building can establish a user account and access LEED or other related information.

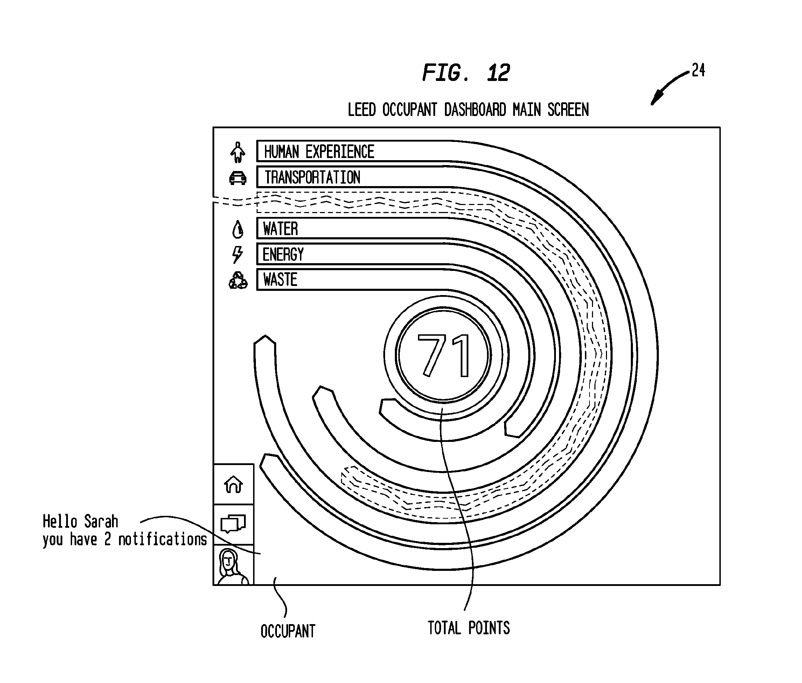

In Fig. 12, a user can view a representation of the LEED dynamic plaque associated with their project or building. The user can view notifications showing which actions might be taken that day, month or quarter in order to achieve LEED or other points and a possible higher LEED or other rating.

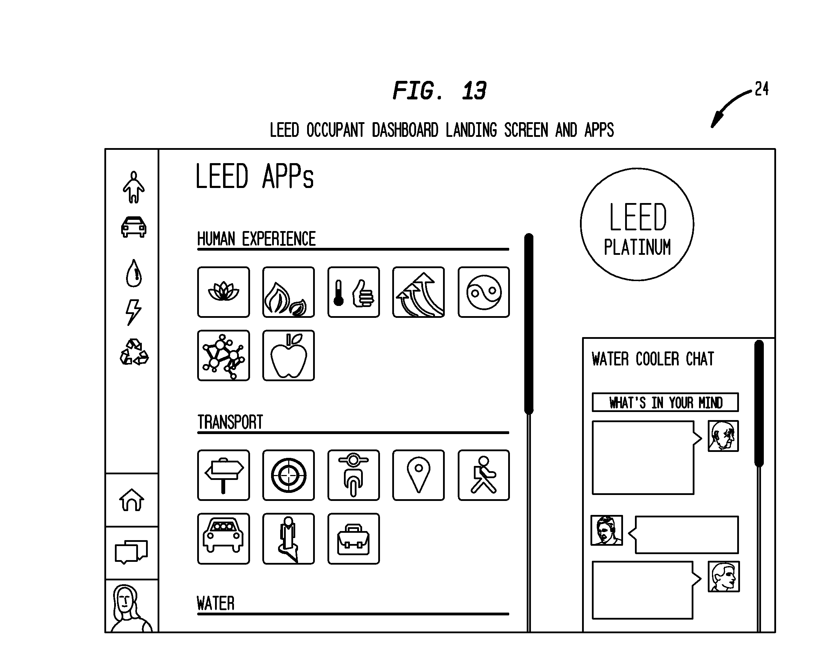

In Fig. 13, LEED or other applications are organized according to LEED dynamic plaque or other categories. A chat function may also be established or enabled via the server with a central or other sites. A current level of building certification can also be displayed on the application page.

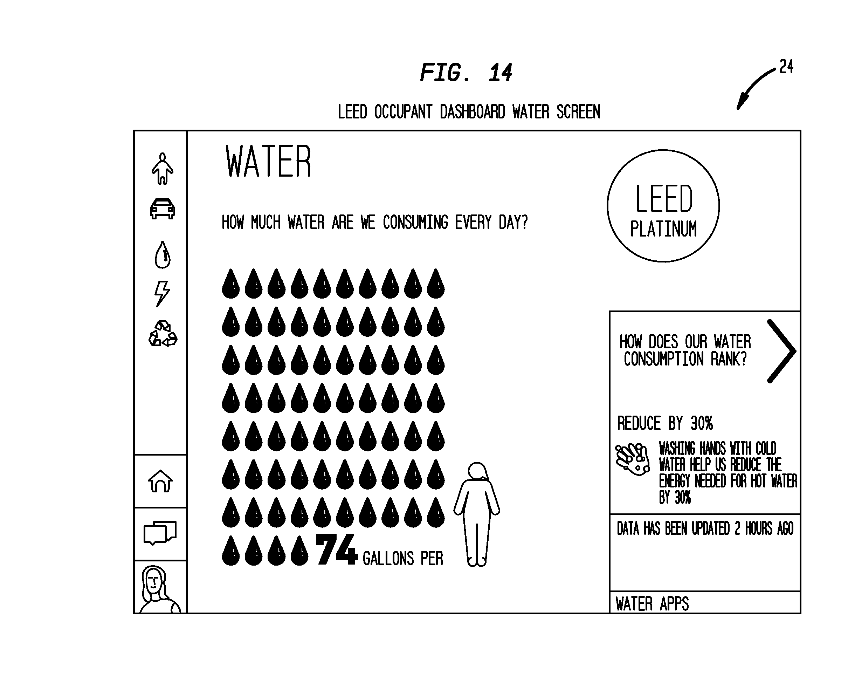

As shown in Fig. 14, users can see how the project or building is performing in each performance category. In each performance category, goals can be set the building and its occupants must meet for their target LEED or other certification, or to maintain their existing level of certification.

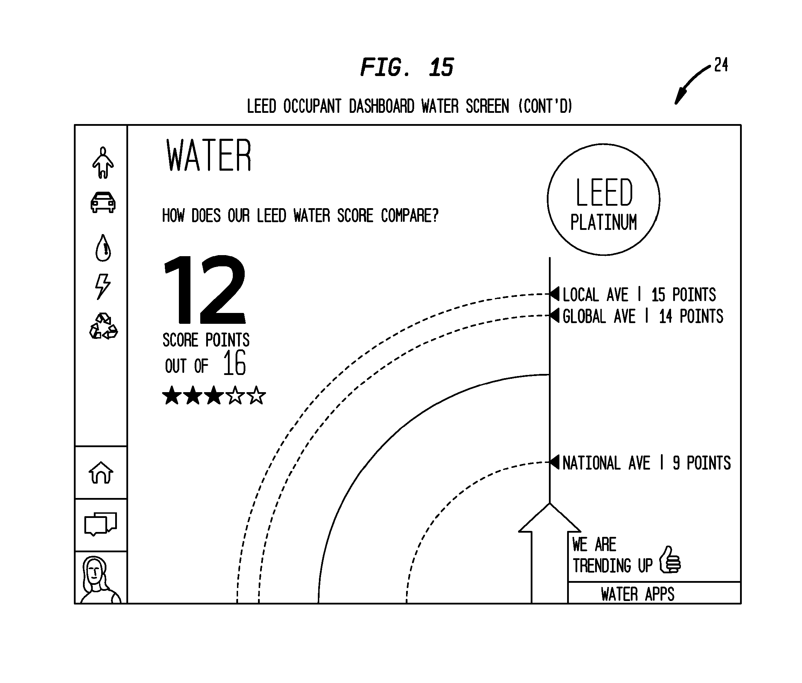

In Fig. 15, users can see how their project or building compares to other projects in the area or around the world in each category. They may also see whether they are trending up or down in each performance category.

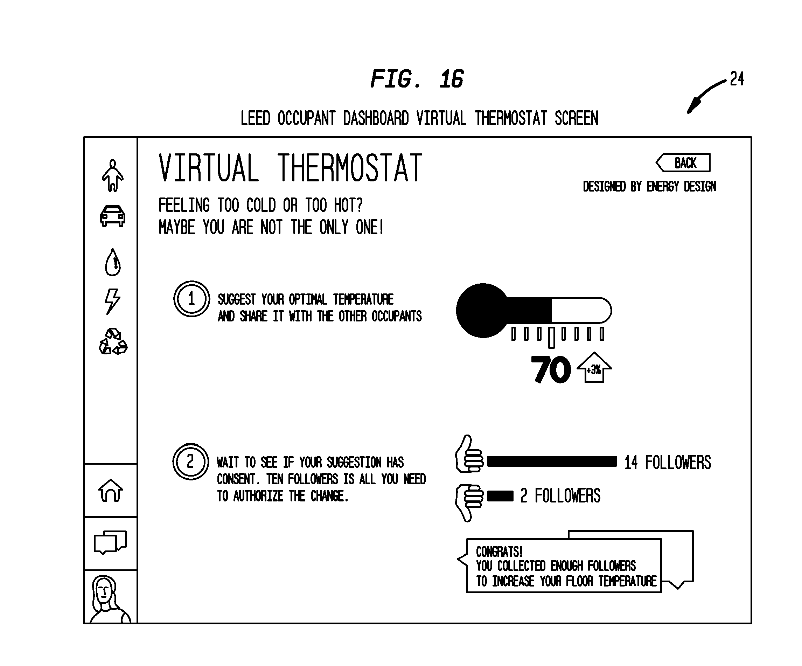

In Fig. 16, a sample application is shown that allows people to control their temperature if their building is equipped with VAV boxes. This particular application would permit users to find people in the space or nearby room who want to change the ambient temperature.

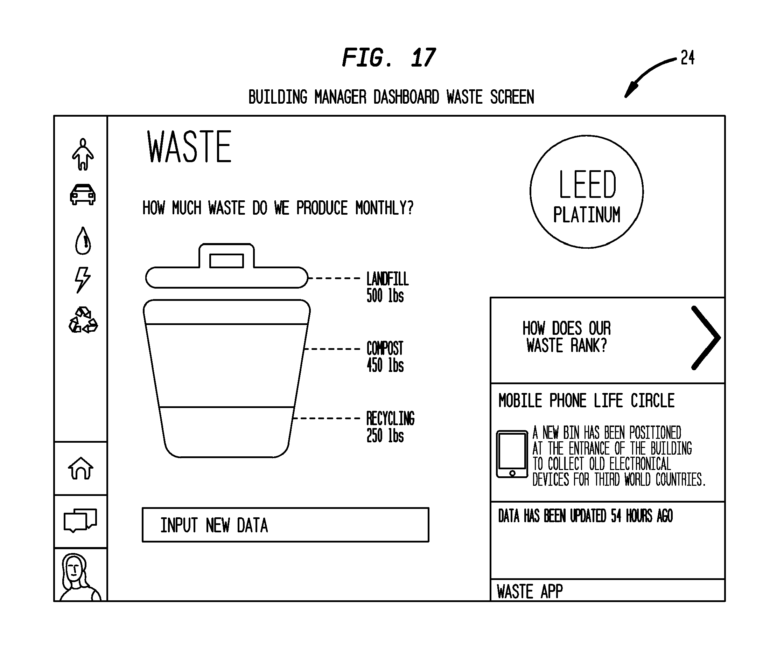

In Fig. 17, a building manager can use a dashboard device to input data and see how the project or building is performing in each category.

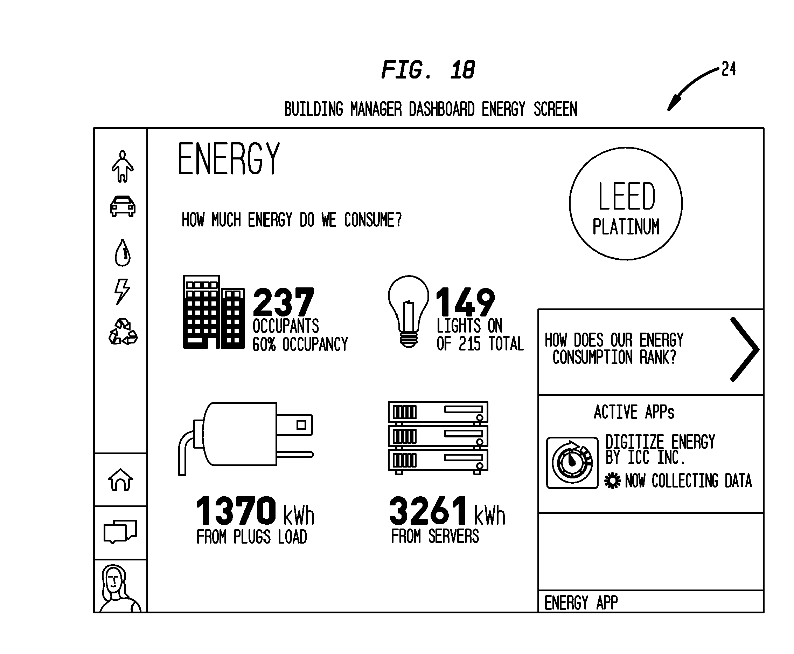

In Fig. 18, a building manager can see additional information which might affect a LEED or other score. According to one embodiment, the building manager can see occupancy, lighting use, plug load use and server use. This allows the building manager to determine if applications are working and/or if there are any anomalies requiring attention.

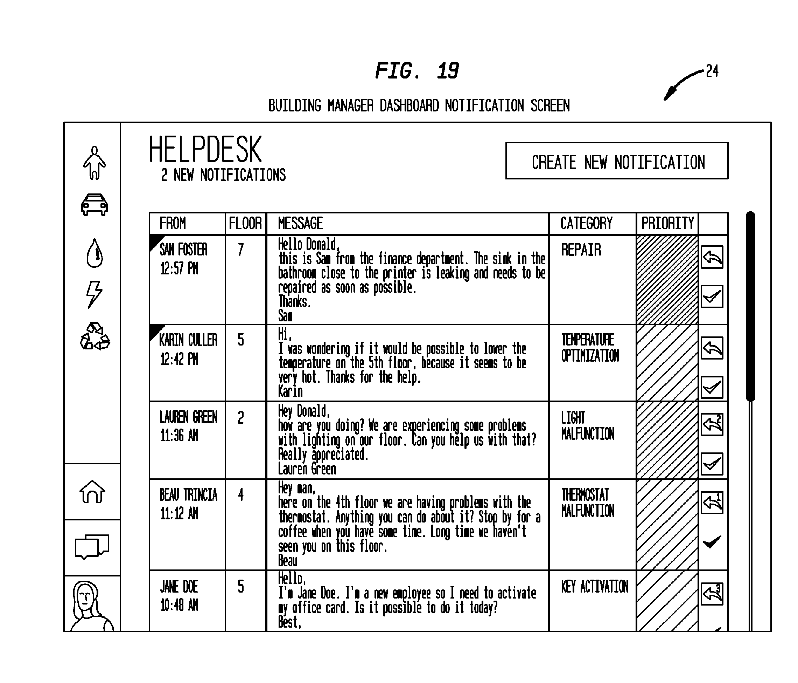

In Fig. 19, the manager has access to a manager dashboard page that permits the collection of information from building occupants regarding building malfunctions or related issues such as repairs. The building manager can also communicate with occupants regarding scheduled maintenance and other issues.

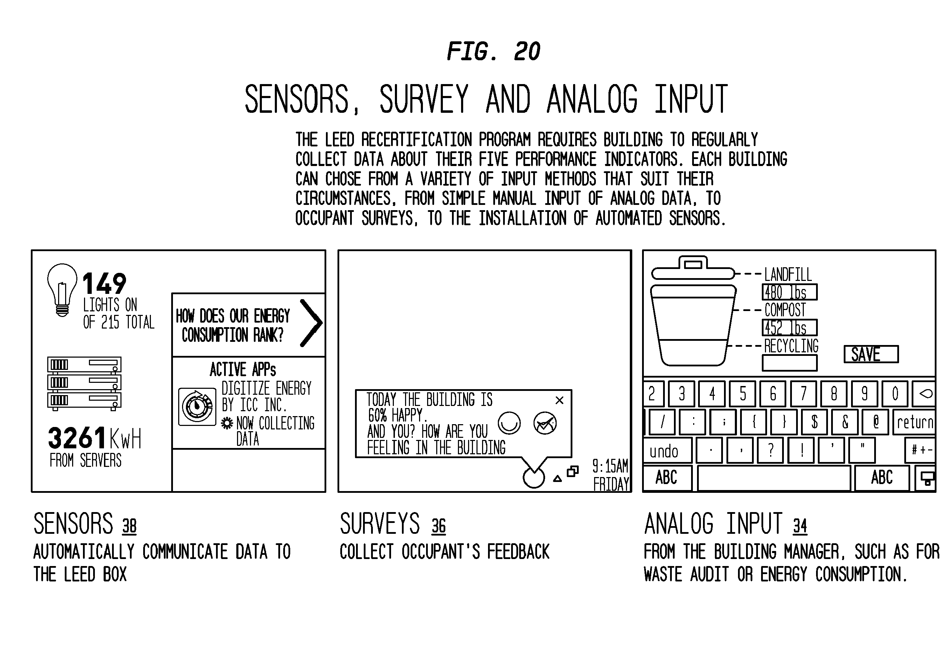

In Fig. 20, and according to one embodiment, inputs to system 20 can come a variety of sources and direction. Complex and large structures with building management systems are connected to device 22 and dashboard 24. Smaller and less sophisticated structures or buildings may be able to manual inputs to system 20.

The calculation of LEED or other certification or recertification program points (which can be used, by way of example, to determine a LEED certification level) may be based on a method that assigns a score for the structural and design aspects of a building that is then augmented by further scores corresponding to the performance of the building over time. A design and construction component may be calculated based on design decisions and strategies implemented using dynamic programming algorithms and weighted decision trees. The algorithm factors in extra points or concessions due to certain combinations of strategies. A reference table with points for different options and combinations can be maintained for use by the algorithm. A performance component may be calculated based on the consistency of the building performance across multiple factors by using descriptive statistical methods. For example, by calculating the standard deviation and mean values of time-series data captured using data acquisition device 22 and/or dashboard device 24 and/or 26, an algorithm can determine the consistency of the measured performance data. The algorithm then determines a correlating factor, if any, for the building, which it includes in its performance analysis to determine a number of points or a score for performance. Each performance factor may have its own calculating algorithm. For example, the energy score may be calculated using a combination of energy used, building type, location and occupancy level. Such normalizing elements can permit benchmarks to be calculated in a standardized manner across all building types.

Thus, and in one embodiment, the total score or points earned by a building may be calculated by:

Total Points = Strategic Design Score + Performance Factor 1 Score + … + Performance Factor n Score + Correlating Factor Score

Byway of example, a LEED certification level can be determined by the number of total points achieved by a building. These points can be maintained as a reference table, and may be different for each type of certification and rating system used. As an example, the LEED 2009 definition uses the following reference table for existing buildings:

**Certified:** 40-49 points
**Silver:** 50-59 points
**Gold:** 60-79 points
**Platinum:** 80 points and above

**Example Score Calculation**

As an example, we assume the evaluation of a building located in downtown Washington DC, and show how the algorithm would calculate points for the building and determine its certification level.

For construction and design of the building, which includes credits for strategies used in storm water management and treatment, establishment of biodiversity, urban heat island effect, light pollution reduction, results in 8 points.

Because this building has monitoring systems in place, a LEED box captures and analyzes data. The LEED box identifies trends of energy use, and gives credit for energy reduction changes occurring over time as occupancy of building changes. Energy performance is determined to yield 18 points.

Similarly, monitoring of water use and water reduction mechanisms results in another 15 points towards the building's score.

The building manager collects information from weekly waste audits and uploads data to the LEED box showing the total amount of waste attributed to the occupants in the building. This accounts for 4 points.

The building manager runs a periodic survey to capture inputs from all building occupants and gauge level of comfort in the building, ease of access, functioning of energy reduction mechanisms and overall impact of the building on the occupant's experience. These performance results earn a total of 22 points.

A mobile app also captures data on transport methods used by the occupants to reach the building - by metro, bus, bicycle, car or walking. Such data can be uploaded to device 22 periodically for analysis and the results provide for another 17 points for the building and its occupants.

$$\text{Thus, Total Points} \quad = 8 + 18 + 15 + 4 + 22 + 17 = \textbf{84 points}$$

Per the reference table set forth above, the building achieves 80+ points and is awarded a platinum level LEED certification.

Benchmarking algorithms may employ relevant building information anonymously without referencing details that might identify the building's location or owners. Benchmark data helps building owners understand how their building is performing compared to other similar buildings, and identify areas for improvement.

The above-described embodiments should be considered as examples of the inventions described and disclosed herein, rather than as limiting the scope thereof. In addition to the foregoing embodiments, review of the detailed description and accompanying drawings will show that many other embodiments are contemplated that may not be explicitly disclosed or described herein. Accordingly, many combinations, permutations, variations and modifications of the foregoing embodiments will nevertheless fall within the spirit and scope of the various inventions described and disclosed herein.

Additionally, the methods, systems, devices and components disclosed and described herein may be employed in building or structure monitoring, certification, or re-certification programs or systems other than those employed by USGBC, and are not restricted to a LEED monitoring, certification, or re-certification program or system.

**Claims**

1. A method for monitoring, certifying or recertifying performance of a building or structure, comprising:

   acquiring building or structure performance data corresponding to the building or structure, the performance data comprising at least three of water data, energy data, human experience data, transportation data, and waste data;
   displaying, using at least one building or structure dashboard device, the performance data to at least one of a building or structure user and a building or structure dashboard manager;
   transferring at least portions of the performance data to a server, and

on the basis of the transferred data, certifying or not certifying the building or structure as meeting predetermined building or structure performance certification standards.

2. The method of claim 1, further comprising acquiring the building or structure performance data using at least one building or structure data acquisition device and corresponding sensors and data inputs located in the building or structure, the data acquisition device being operably connected to the dashboard device.

3. The method of claim 2, wherein the data acquisition device comprises a variable air volume control device or system.

4. The method of claim 2, further comprising the user or dashboard manager inputting building or structure performance data into the dashboard device.

5. The method of claim 1, further comprising associating a unique IP address with the building or structure.

6. The method of claim 1, further comprising using at least one of a mobile phone, a desktop computer, a laptop computer, a tablet computer, a personal data assistant (PDA) and a touchscreen device as the dashboard device.

7. The method of claim 1, further comprising generating a score for the performance data received from the building or structure.

8. The method of claim 7, further comprising employing the score to determine whether the building or structure meets the predetermined performance certification standards.

9. The method of claim 7, further comprising certifying or not certifying the building or structure as meeting the predetermined performance certification standards on the basis of the score.

10. A system for monitoring, certifying or recertifying performance of a building or structure, comprising:

at least one building or structure data acquisition device configured to receive input signals from a plurality of sensors located in or around the building or structure, the input signals representing building or structure performance data corresponding to the building or structure, the performance data comprising at least three of water data, energy data, human experience data, transportation data, and waste data;
at least one dashboard device operably connected to the data acquisition device, the dashboard device being configured to display the performance data to at least one of a building or structure user and a building or structure dashboard manager, the dashboard device further being configured to receive building or structure performance input data from at least one of the user and the manager;
computer and internet means for transferring at least portions of the building or structure performance data to a server, the server being configured and programmed to at least one of store the transferred data for analysis and to certify or not certify the building or structure as meeting the performance certification standards.

11. The system of claim 10, wherein the data acquisition device comprises a variable air volume control device or system.

12. The system of claim 10, wherein the data acquisition device is further configured to receive building or structure performance input data from the user or dashboard manager.

13. The system of claim 10, wherein the building or structure has a unique IP address associated therewith.

14. The system of claim 10, wherein the dashboard device is at least one of a mobile phone, a desktop computer, a laptop computer, a tablet computer, a personal data assistant (PDA) and a touchscreen device as the dashboard device.

15. The system of claim 10, wherein the system is further configured to generate a score for the performance data received from the building or structure.

## FIG. 1

10

| ACQUIRE BUILDING OR STRUCTURE PERFORMANCE DATA | 12 |

↓

| DISPLAY USING A BUILDING OR STRUCTURE DASHBOARD DEVICE THE BUILDING OR STRUCTURE PERFORMANCE DATA | 14 |

↓

| TRANSFER AT LEAST PORTIONS OF THE BUILDING OR STRUCTURE PERFORMANCE DATA TO A CENTRAL SERVER | 16 |

↓

| CERTIFY OR NOT CERTIFY THE BUILDING OR STRUCTURE AS MEETING PREDETERMINED BUILDING OR STRUCTURE PERFORMANCE CERTIFICATION STANDARDS | 18 |

FIG. 2
THE LEED ECOSYSTEM

*FIG. 3*

SENSORS

CONTROL SYSTEMS

SURVEYS

BUILDING AUTOMATION SYSTEMS

MOBILE APPS

38

42

36

44

46

20

DATA COLLECTION MECHANISMS

BUILDING SPECIFIC VISUAL REPRESENTATION OF LEED LEVEL

LEED BOX

BUILDING SPECIFIC PERFORMANCE DATA

26

22

24

DYNAMIC PLAQUE

LEED DASHBOARD

INTERNET

48

COLLATED IN SERVER FOR ANALYSIS AND OTHER APPLICATIONS

52

50

40

BENCHMARKS AND ANALYTICS

SERVER (HARDWARE + SOFTWARE)

LEED CERTIFICATION DEPENDS ON SCORE/POINTS ACHIEVED PER MULTIPLE FACTORS

EP 2 779 042 A1

FIG. 4

70

**12** COLLECT DATA

**11** PROCESS, ORGANIZE AND STORE DATA

**13** CALCULATE PERFORMANCE

**14** DISPLAY ELECTRONIC PLAQUE, LEED DASHBOARD

INCLUDES DATA COLLECTION FROM SENSORS, BUILDING AUTOMATION SYSTEMS, CONTROL SYSTEMS, SURVEYS, MOBILE APPS

ELECTRONIC PLAQUE DEPICTS CURRENT STATUS ACROSS LEED SPECIFIC METRICS LEED DASHBOARD DEPICTS BUILDING PERFORMANCE OVER TIME AND OTHER RELEVANT INFORMATION

**54** NOTIFY BUILDING MANAGER

**52** PERFORMANCE AS EXPECTED?

NO

YES

NOTIFICATION VIA LED ALERTS, EMAIL, TEXT MESSAGES AND OTHER MECHANISMS

**56** UPDATE DATA ON SERVER

**58** ANALYZE AND BENCHMARK AGAINST OTHER BUILDINGS

**18** CALCULATE LEED POINTS/SCORE

**60** COLLECT OTHER INFORMATION RELEVANT FOR BUILDING

SCORE/POINTS ACHIEVED BASED ON MULTIPLE FACTORS

EP 2 779 042 A1

## FIG. 5
### THE LEED BOX

STREET ADDRESS: 880 POWELL ST.
IP ADDRESS: 110.57.868.47.112

22

## FIG. 6

HUMAN EXPERIENCE
TRANSPORTATION
WATER
ENERGY
WASTE

71

26

Hello Sarah
you have 2 notifications

OCCUPANT

TOTAL POINTS

*FIG. 7*

HUMAN EXPERIENCE
TRANSPORTATION
WATER
ENERGY
WASTE

24

TOTAL POINTS
Hello Sarah
you have 2 notifications
OCCUPANT

71

# FIG. 8

HUMAN EXPERIENCE
TRANSPORTATION
WATER
ENERGY
WASTE

TOTAL POINTS
Hello Sarah
you have 2 notifications
OCCUPANT

*FIG. 9*

24

HUMAN EXPERIENCE
TRANSPORTATION
WATER
ENERGY
WASTE

71

TOTAL POINTS

OCCUPANT

Hello Sarah
you have 2 notifications

EP 2 779 042 A1

HUMAN EXPERIENCE

TRANSPORTATION

WATER

ENERGY

WASTE

Hello Sarah
you have 2 notifications

OCCUPANT

TOTAL POINTS

71

FIG. 10

24

EP 2 779 042 A1

*FIG. 11*
LEED NOTIFICATION ON OCCUPANT DESKTOP DASHBOARD

24

START — SARAH

STORE — MAPS — PCWORLD MACWORLD — SNAGIT 11

PEOPLE — MUSIC — LEED PLATINUM

CALENDAR 05 MONDAY — READER — CAMERA — VIDEO — SOLITAIRE — WONDERLIST

STORIFY TEAM — PINBALL — MESSAGING

TODAY I BIKED TO WORK — LEED THANKS YOU FOR YOUR CONTRIBUTION HAE A NICE DAY.

WEATHER WEATHER

WEATHER — SKYDIVE — 32 GAL — WINDOWS EXPLORER

FINANCE — DESKTOP — COOK BOOK

09:11 MONDAY FEBRUARY 27

xBOX LIVE GAMES
INTERNET EXPLORER
PHOTOS
REMOTE DESKTOP
xBOX CAMPANION

## FIG. 12

LEED OCCUPANT DASHBOARD MAIN SCREEN

HUMAN EXPERIENCE

TRANSPORTATION

WATER

ENERGY

WASTE

71

Hello Sarah
you have 2 notifications

OCCUPANT

TOTAL POINTS

EP 2 779 042 A1

FIG. 13

LEED OCCUPANT DASHBOARD LANDING SCREEN AND APPS

# FIG. 14

LEED OCCUPANT DASHBOARD WATER SCREEN

24

## WATER

HOW MUCH WATER ARE WE CONSUMING EVERY DAY?

**LEED**
PLATINUM

**74** GALLONS PER

HOW DOES OUR WATER CONSUMPTION RANK?

REDUCE BY 30%

WASHING HANDS WITH COLD WATER HELP US REDUCE THE ENERGY NEEDED FOR HOT WATER BY 30%

DATA HAS BEEN UPDATED 2 HOURS AGO

WATER APPS

EP 2 779 042 A1

# FIG. 15

LEED OCCUPANT DASHBOARD WATER SCREEN (CONT'D)

## WATER

HOW DOES OUR LEED WATER SCORE COMPARE?

**12**

SCORE POINTS
OUT OF 16

★★★☆☆

LEED
PLATINUM

◀ LOCAL AVE | 15 POINTS
◀ GLOBAL AVE | 14 POINTS

◀ NATIONAL AVE | 9 POINTS

WE ARE
TRENDING UP 👍

WATER APPS

## FIG. 16

LEED OCCUPANT DASHBOARD VIRTUAL THERMOSTAT SCREEN

24

# VIRTUAL THERMOSTAT

BACK

DESIGNED BY ENERGY DESIGN

FEELING TOO COLD OR TOO HOT?
MAYBE YOU ARE NOT THE ONLY ONE!

(1) SUGGEST YOUR OPTIMAL TEMPERATURE
AND SHARE IT WITH THE OTHER OCCUPANTS

70 +3%

(2) WAIT TO SEE IF YOUR SUGGESTION HAS
CONSENT. TEN FOLLOWERS IS ALL YOU NEED
TO AUTHORIZE THE CHANGE.

14 FOLLOWERS

2 FOLLOWERS

CONGRATS!
YOU COLLECTED ENOUGH FOLLOWERS
TO INCREASE YOUR FLOOR TEMPERATURE

EP 2 779 042 A1

*FIG. 17*

24

BUILDING MANAGER DASHBOARD WASTE SCREEN

# WASTE

HOW MUCH WASTE DO WE PRODUCE MONTHLY?

LEED
PLATINUM

LANDFILL
500 lbs

COMPOST
450 lbs

RECYCLING
250 lbs

HOW DOES OUR
WASTE RANK?

>

MOBILE PHONE LIFE CIRCLE

A NEW BIN HAS BEEN POSITIONED AT THE ENTRANCE OF THE BUILDING TO COLLECT OLD ELECTRONICAL DEVICES FOR THIRD WORLD COUNTRIES.

DATA HAS BEEN UPDATED 54 HOURS AGO

INPUT NEW DATA

WASTE APP

EP 2 779 042 A1

## FIG. 18

BUILDING MANAGER DASHBOARD ENERGY SCREEN

24

# ENERGY

LEED
PLATINUM

HOW MUCH ENERGY DO WE CONSUME?

**237**
OCCUPANTS
60% OCCUPANCY

**149**
LIGHTS ON
OF 215 TOTAL

HOW DOES OUR ENERGY
CONSUMPTION RANK?  〉

**1370** kWh
FROM PLUGS LOAD

**3261** kWh
FROM SERVERS

ACTIVE APPs

DIGITIZE ENERGY
BY ICC INC.
✳ NOW COLLECTING DATA

ENERGY APP

## FIG. 19

~24

BUILDING MANAGER DASHBOARD NOTIFICATION SCREEN

# HELPDESK
2 NEW NOTIFICATIONS

CREATE NEW NOTIFICATION

| FROM | FLOOR | MESSAGE | CATEGORY | PRIORITY | |
|------|-------|---------|----------|----------|---|
| SAM FOSTER 12:57 PM | 7 | Hello Donald, this is Sam from the finance department. The sink in the bathroom close to the printer is leaking and needs to be repaired as soon as possible. Thanks. Sam | REPAIR | | |
| KARIN CULLER 12:42 PM | 5 | Hi, I was wondering if it would be possible to lower the temperature on the 5th floor, because it seems to be very hot. Thanks for the help. Karin | TEMPERATURE OPTIMIZATION | | |
| LAUREN GREEN 11:36 AM | 2 | Hey Donald, how are you doing? We are experiencing some problems with lighting on our floor. Can you help us with that? Really appreciated. Lauren Green | LIGHT MALFUNCTION | | |
| BEAU TRINCIA 11:12 AM | 4 | Hey man, here on the 4th floor we are having problems with the thermostat. Anything you can do about it? Stop by for a coffee when you have some time. Long time we haven't seen you on this floor. Beau | THERMOSTAT MALFUNCTION | | |
| JANE DOE 10:48 AM | 5 | Hello, I'm Jane Doe. I'm a new employee so I need to activate my office card. Is it possible to do it today? Best, | KEY ACTIVATION | | |

# FIG. 20

# SENSORS, SURVEY AND ANALOG INPUT

THE LEED RECERTIFICATION PROGRAM REQUIRES BUILDING TO REGULARLY
COLLECT DATA ABOUT THEIR FIVE PERFORMANCE INDICATORS. EACH BUILDING
CAN CHOSE FROM A VARIETY OF INPUT METHODS THAT SUIT THEIR
CIRCUMSTANCES, FROM SIMPLE MANUAL INPUT OF ANALOG DATA, TO
OCCUPANT SURVEYS, TO THE INSTALLATION OF AUTOMATED SENSORS.

**149** LIGHTS ON OF 215 TOTAL

HOW DOES OUR ENERGY CONSUMPTION RANK?

**3261** KwH FROM SERVERS

ACTIVE APPs
DIGITIZE ENERGY BY ICC INC.
❋ NOW COLLECTING DATA

TODAY THE BUILDING IS 60% HAPPY.
AND YOU? HOW ARE YOU FEELING IN THE BUILDING

9:15AM
FRIDAY

LANDFILL
480 lbs
COMPOST
452 lbs
RECYCLING
SAVE

| 2 | 3 | 4 | 5 | 6 | 7 | 8 | 9 | 0 | ⌫ |
| / | : | ; | ( | ) | $ | & | @ | return |
| undo | . | , | ? | ! | ' | " | # + - |
| ABC | | ABC | |

## SENSORS 38
AUTOMATICALLY COMMUNICATE DATA TO THE LEED BOX

## SURVEYS 36
COLLECT OCCUPANT'S FEEDBACK

## ANALOG INPUT 34
FROM THE BUILDING MANAGER, SUCH AS FOR WASTE AUDIT OR ENERGY CONSUMPTION.

EP 2 779 042 A1

## EUROPEAN SEARCH REPORT

**Application Number**

EP 14 16 0380

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/107076 A1 (GROHMAN WOJCIECH [US] ET AL) 29 April 2010 (2010-04-29)<br>* abstract *<br>* paragraph [0004] - paragraph [0006] *<br>* paragraph [0050] - paragraph [0053] *<br>* paragraph [0082] - paragraph [0083] *<br>----- | 1-13 | INV.<br>G06Q10/04 |
| | | | **TECHNICAL FIELDS SEARCHED (IPC)**<br><br>G05B<br>G06Q |

The present search report has been drawn up for all claims

| Place of search | Date of completion of the search | Examiner |
|---|---|---|
| The Hague | 10 July 2014 | Moltenbrey, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 16 0380

10-07-2014

| Patent document cited in search report | Publication date | Patent family member(s) | | Publication date |
|---|---|---|---|---|
| US 2010107076 A1 | 29-04-2010 | CA | 2698797 A1 | 16-09-2010 |
| | | EP | 2241837 A1 | 20-10-2010 |
| | | US | 2010107076 A1 | 29-04-2010 |

EPO FORM P0459

For more details about this annex : see Official Journal of the European Patent Office, No. 12/82